# EUROPEAN PATENT APPLICATION

(11) **EP 2 067 661 A2**
(43) Date of publication of application: **10.06.2009**
(21) Application number: 08168804.6
(22) Date of filing: 11.11.2008
(51) Int. Cl.: B60Q 7/00

(54) **Emergency stop warning device for motor vehicles in general, particularly warning triangle**

(30) Priority: 06.12.2007 IT MI20072295
(71) Applicant: AUTOTEK S.r.l., 22060 Carugo (Como) (IT)
(72) Inventor: Sinelli, Edoardo, 20040, Cornate D'Adda MI (IT)
(74) Representative: Modiano, Micaela Nadia

(57) **Abstract**

An emergency stop warning device (1) for motor vehicles in general, particularly a warning triangle, comprising two half-shells (2, 3) pivoted to the ends of the base side (5) of a warning triangle, which can be completed by means of two inclined sides (6, 7) pivoted at the ends of the base side (5), the device further comprising, at the region where the inclined sides (6, 7) are pivoted to the base side (5), resting feet (10) provided with extraction means which can be actuated by the rotation of the inclined sides (6, 7).

## Description

The present invention relates to an emergency stop warning device for motor vehicles in general, particularly a warning triangle.

As is known, a current trend is to minimize the dimensions of the emergency triangle typically used in motor vehicles without of course reducing the standardized dimensions required for emergency triangles.

Continuous optimization of the space occupation dimensions of the triangle in the closed position has necessarily led to a greater complexity for installing the triangle, since with the solutions of the background art it is necessary to assemble several elements and proceed with the manual extraction of the ground resting elements.

Obviously, this way of proceeding has a negative effect on the use of the triangle and moreover increases significantly the time required to position it on the road.

The aim of the invention is to eliminate the drawbacks noted above, by providing an emergency stop warning device for motor vehicles in general, particularly a warning triangle, that while having very small space occupation dimensions when not in use can be applied in particularly short times with automatic extraction of the elements required for its support.

Within this aim, an object of the invention is to provide a warning device in which it is possible to maintain firmly the closed position of the triangle when not in use without however having to proceed with the application of additional elements.

An object of the present invention is to provide a warning device which, thanks to its particular constructive characteristics, is capable of giving the greatest assurances of reliability and safety in use.

Another object of the present invention is to provide an emergency stop warning device for motor vehicles in general, particularly a warning triangle, that can be obtained easily starting from commonly commercially available elements and materials and is also competitive from a merely economical standpoint.

This aim, these objects and others that will become better apparent hereinafter are achieved by an emergency stop warning device for motor vehicles in general, particularly a warning triangle, comprising two half-shells pivoted to the ends of the base side of a warning triangle, which can be completed by means of two inclined sides pivoted at the ends of said base side, characterized in that it comprises, at the region where said inclined sides are pivoted to said base side, resting feet provided with extraction means which can be actuated by the rotation of said inclined sides.

Further characteristics and advantages of the present invention will become better apparent from the description of a preferred but not exclusive embodiment of an emergency stop warning device for motor vehicles in general, particularly a warning triangle, illustrated by way of non-limiting example in the accompanying drawings, wherein:

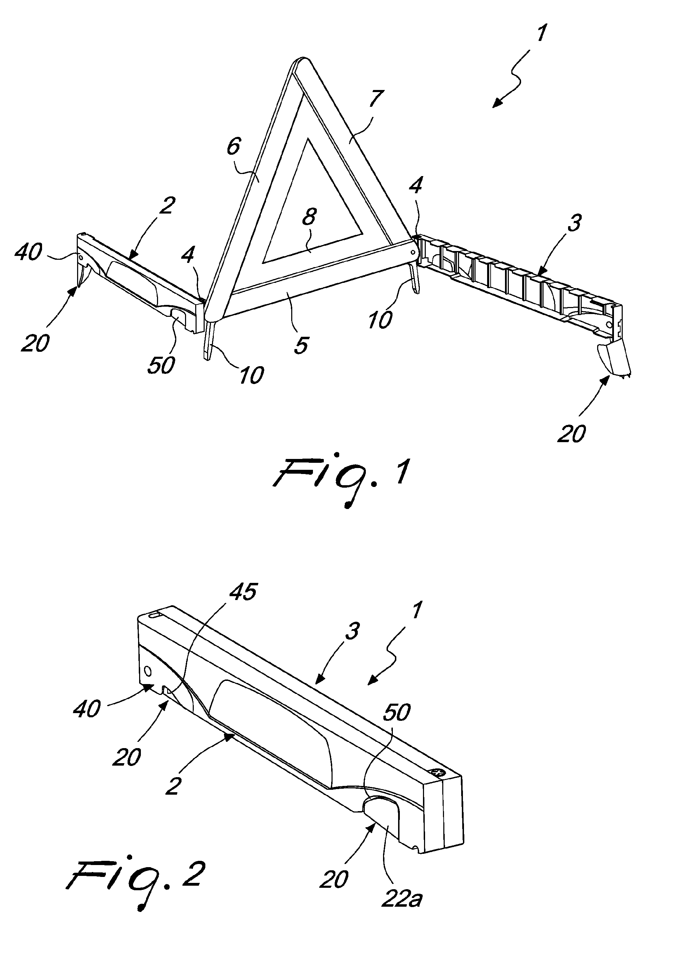

Figure 1 is a schematic perspective view of the warning device in the position for use;
Figure 2 is a view of the warning device in the closed position;
Figure 3 is a view of the detail of a resting foot in the closed position;
Figure 4 is a view of the resting foot during the extraction step;
Figure 5 is a view of the resting foot in the extracted position;
Figure 6 is a schematic perspective view of the outer resting foot;
Figure 7 is a perspective view of the covering for retaining the outer resting foot in position;

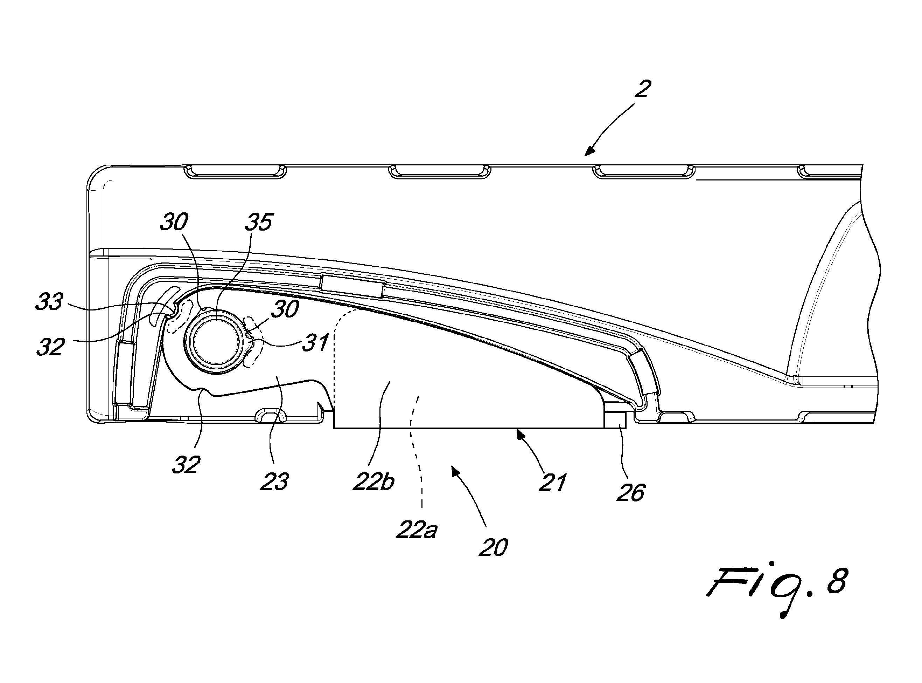

Figure 8 is a schematic view of the outer resting foot in the closed position;

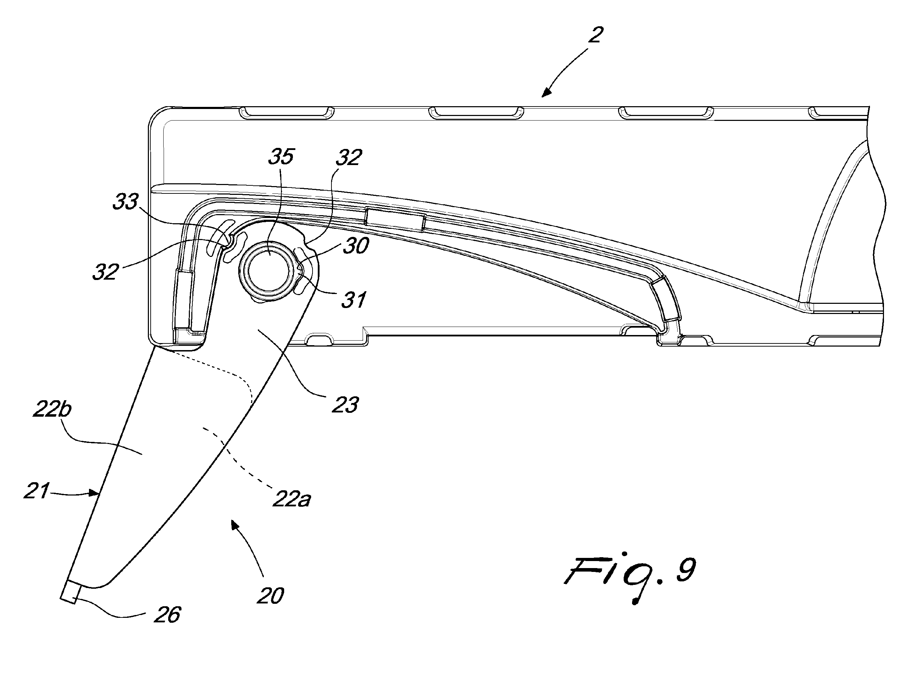

Figure 9 is a view of the outer resting foot in the open position.

With reference to the figures, the emergency stop warning device for motor vehicles in general, particularly a warning triangle, generally designated by the reference numeral 1, comprises a box-like body provided by two half-shells 2 and 3, which are pivoted, at their ends, to pivots 4 provided at the base side 5 of a warning triangle.

The pivots 4 define an axis of rotation that lies substantially parallel to the plane of arrangement of the base side and is perpendicular to the longitudinal extension of such base side.

The half-shells 2 and 3 are shaped so as to mate with each other in order to define a box-like body with the triangle in the closed position, to accomodate the base side and the inclined sides 6 and 7 which are pivoted at the ends of the base side 5 about an axis that is substantially perpendicular to the plane of arrangement of the base side 5.

In a per se known manner, the inclined sides 6 and 7 can be coupled to each other in the extracted position to form the triangle.

Advantageously, the base side 5 and the inclined sides 6 and 7 are made of rigid plastics, have a normally refractive surface and support internally a reflective triangle 8, which is made advantageously of a flexible material, so that it can be folded easily internally when the triangle is in the position for nonuse.

One of the peculiarities of the invention resides in that at the region where the inclined sides 6 and 7 are pivoted to the base side there are resting feet 10 provided with extraction means that can be actuated directly by the rotation of the inclined sides.

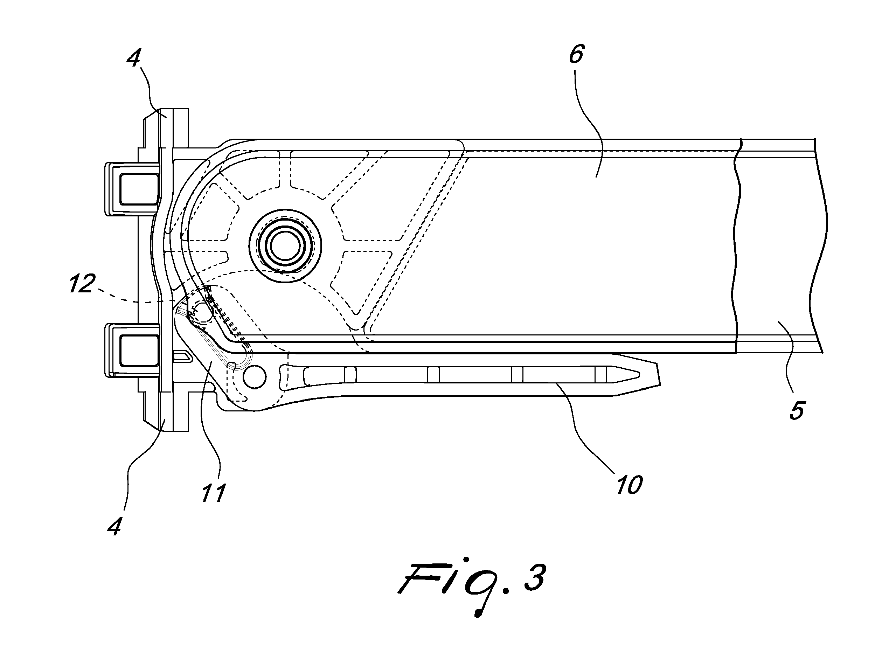

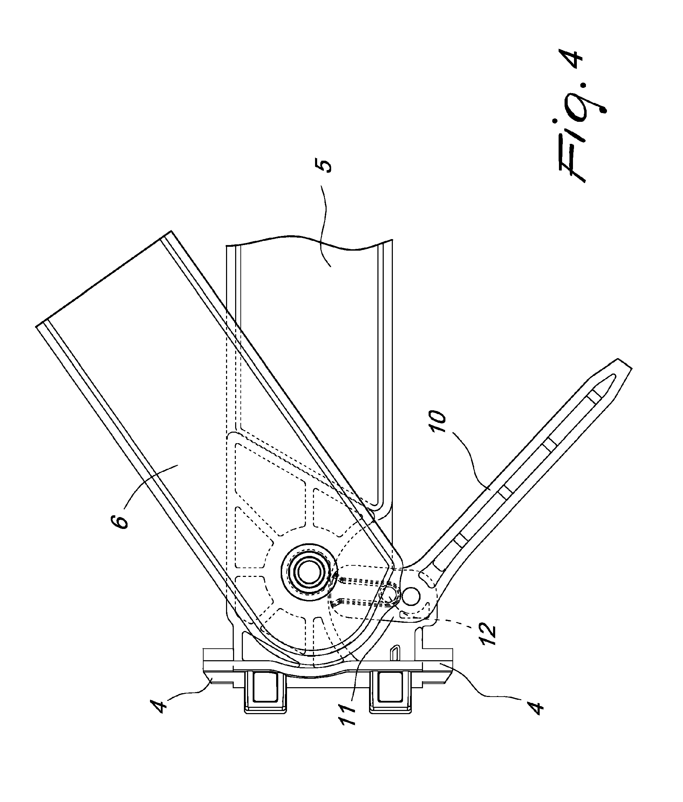

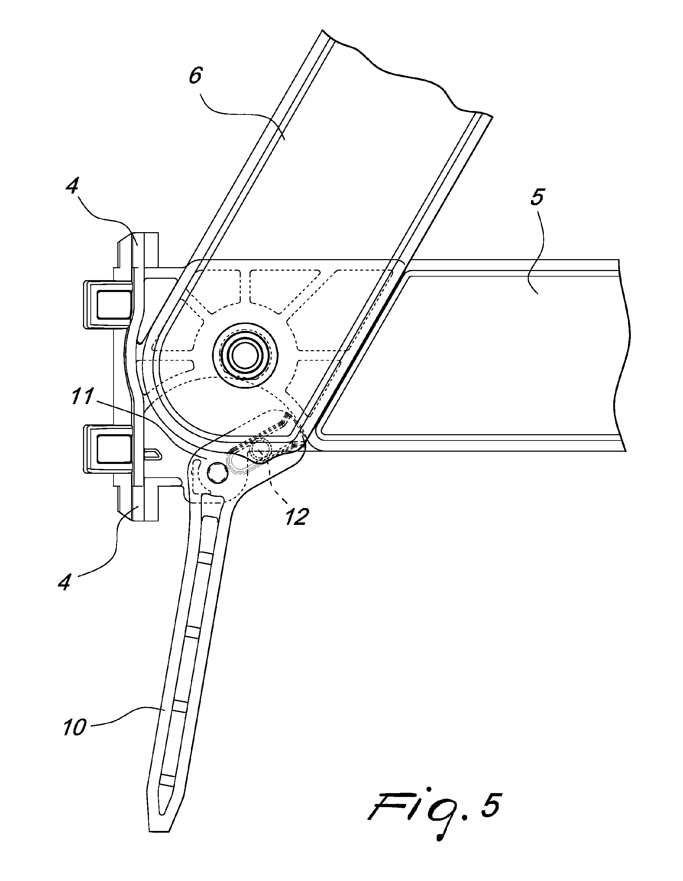

Advantageously, as shown in Figures 3, 4 and 5, the resting feet 10 are pivoted to the base side about an axis that is substantially parallel to the pivoting axis of the inclined sides 6 and 7 and have a fork-like portion 11, which engages a pin 12 provided on the end of the inclined sides 6.

Consequently, the toothed gear-like coupling between the feet 10 and the inclined sides 6 and 7 causes, when the triangle is formed by rotating the sides 6 and 7, which in the position for nonuse are superimposed on the opposite faces of the base side, the automatic extraction of the resting feet 10, which arrange themselves in an extracted position.

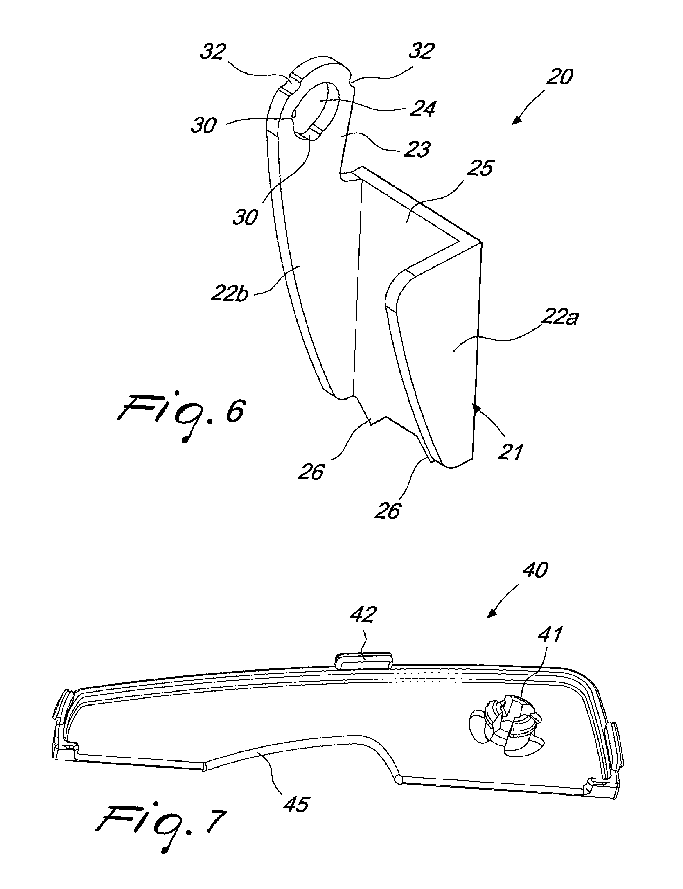

The base is then completed by the half-shells 2 and 3, which arrange themselves substantially at right angles to the base side 5 and have, at the free end, an outer resting foot, designated by the reference numeral 20, which, as shown more clearly in Figure 6, is provided with a U-shaped body 21 with side walls 22a and 22b. On one side wall 22b, a tab 23 is provided that has an eye 24 for pivoting on a contoured pivot 35 provided within the corresponding half-shell.

At the outer end of the central portion 25 that joins the side walls 22a and 22b abutment teeth 26 are provided, which stabilize the connection to the ground.

The outer resting foot 20 has a U-shaped contour, so as to act as an element for closing the triangle by engaging with its side wall 22a the half-shell that lies opposite the half-shell to which it is pivoted.

Advantageously, the eye 24 is provided with recesses 30, which engage internal protrusions 31 formed on the pivot 35 to define the two stop positions in the open position and in the closed position.

Likewise, in order to increase locking, outer hollows 32 are provided that engage external protrusions 33 formed by the inner surface of the half-shell.

The outer resting feet are retained in position by means of a covering 40, shown in Figure 7, which has an elastic pivot 41 for engagement on the pivot 35 in order to retain the outer resting foot in position.

Moreover, coupling teeth 42 are provided peripherally and allow snap application.

Moreover, the covering 40 has a cutout 45 at which the side wall 22b arranges itself, thus providing a grip element.

The half-shells 2 and 3, proximate to the end that lies opposite the one where the corresponding outer resting foot is provided, have a recess 50, in which the side wall 22a of the foot provided on the other half-shell is inserted, thus obtaining a stable closure of the two half-shells by utilizing the outer resting feet, which thus perform two distinct functions, i.e., supporting the triangle in the position for use and acting as a closure element when the triangle is in the compacted position.

From what has been described it is evident that the device according to the invention achieves the proposed aim and objects, and in particular the fact is stressed that a triangle is provided in which the resting feet are extracted automatically during the triangle forming step, utilizing the toothed gear-like coupling provided between the resting feet and the corresponding ends of the inclined sides.

Moreover, another important aspect consists in that the outer resting feet act as an element for closing the two half-shells that are coupled to each other so as to form the box-like containment body of the triangle.

The invention thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements.

The disclosures in Italian Patent Application no. MI2007A002295, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An emergency stop warning device (1) for motor vehicles in general, particularly a warning triangle, comprising two half-shells (2, 3) pivoted to the ends of the base side (5) of a warning triangle, which can be completed by means of two inclined sides (6, 7) pivoted at the ends of said base side (5), **characterized in that** it comprises, at the region where said inclined sides (6, 7) are pivoted to said base side (5), resting feet (10) provided with extraction means which can be actuated by the rotation of said inclined sides (6, 7).

2. An emergency stop warning device (1) for motor vehicles in general, particularly a warning triangle, comprising a box-like body formed by two half-shells (2, 3) pivoted at the ends of the base side (5) of the warning triangle, which can be completed with two inclined sides (6, 7) that are pivoted to the ends of said base side (5), **characterized in that** it comprises, at the free end of said half-shells (2, 3), outer resting feet (10) that define a U-shaped body and can engage, when the triangle is in the closed position, the other one of said half-shells (2, 3) in order to retain it in the closed position.

3. The warning device according to the preceding claims, **characterized in that** it comprises, at one end of the base side (5), pivots (4) that can engage said half-shells (2, 3) in order to define axes of rotation that are substantially perpendicular to the extension of the base side (5) and are substantially parallel to the plane of arrangement of the base side (5).

4. The warning device according to one or more of the preceding claims, **characterized in that** said means for extracting said resting feet comprise a fork-shaped portion (11) which is formed on the end of said resting feet (10) that can engage a corresponding pin (12) provided on the end of said inclined sides (6, 7).

5. The warning device according to one or more of the preceding claims, **characterized in that** said resting feet (10) have a pivoting axis that is substantially parallel to the axis about which said inclined sides are pivoted to said base side (5).

6. The warning device according to one or more of the preceding claims, **characterized in that** said outer resting feet (10) comprise a U-shaped body (21) that has, on one side wall (22b), a tab (23) provided with an eye (24) for pivoting about a contoured pivot (35) defined by said half-shell.

7. The warning device according to one or more of the preceding claims, **characterized in that** it comprises abutment teeth (26) defined at the end of the central portion (25) that connects the side walls (22a, 22b) of said U-shaped body (21).

8. The warning device according to one or more of the preceding claims**, characterized in that** it comprises inner recesses (30) on said eye (24) which can engage inner protrusions (31) formed on said contoured pivot (35) in order to define stop positions in the open position and in the closed position.

9. The warning device according to one or more of the preceding claims, **characterized in that** it comprises, on said tab (23) of said U-shaped body (21), outer hollows (32) that can engage outer protrusions (33) defined on the inner surface of said half-shell.

10. The warning device according to one or more of the preceding claims, **characterized in that** it comprises a covering (40) provided with an elastic pivot (11) for engagement on said contoured pivot (35) in order to retain said outer resting foot (10) axially, said covering (40) having a cutout (45) at which a side wall (22b) of said U-shaped body (21) is positioned.

11. The warning device according to one or more of the preceding claims, **characterized in that** said half-shells (2, 3) form, proximate to the end that lies opposite the one where the corresponding outer resting foot (10) is located, a recess (50) that can be engaged by the side wall (22a) of the U-shaped body (21) of the outer resting foot (10) provided on the other half-shell.
